# EUROPEAN PATENT APPLICATION

(11) **EP 2 073 045 A1**
(43) Date of publication of application: **24.06.2009**
(21) Application number: 07823056.2
(22) Date of filing: 18.09.2007
(51) Int. Cl.: G02B 6/132, G01D 5/00, G01D 11/00, H01S 5/183

(54) **PROCESS FOR PREPARING MULTILAYERS WITH AN ORDERED MESOPOROUS STRUCTURE, MATERIAL OBTAINED IN THIS MANNER, AND USE**

(30) Priority: 22.09.2006 ES 200602405
(71) Applicant: CONSEJO SUPERIOR DE INVESTIGACIONES CIENTIFICAS, 28006 Madrid (ES); Consejo Nacional De Investigacines Cientificas Y Tecnicas, Buenos Aires (AR)
(72) Inventor: MIGUEZ GARCIA, HERNAN RUY, E-41092 Sevilla (ES); SOLER ILLIA, GALO JUAN DE AVILA ARTURO, Buenos Aires (AR); FUERTES, MARIA CECILIA, Buenos Aires (AR)
(74) Representative: Pons Arino, Angel
(86) International application number: PCT/ES2007/070162
(87) International publication number: WO 2008/034932

(57) **Abstract**

The subject matter of the invention is a simple and reliable process for producing multilayers formed by thin mesoporous films of oxides or oxide or hybrid organic/inorganic materials by means of a combination of sol-gel methods, selfassembly of surfactants and selective functionalization of the surfaces od the pores. Each one of the constituent layers has a chemical composition, thickness and index of refraction.

## Description

### FIELD OF THE ART

The object of the present invention is a process for producing materials with optical properties, which can be used in optical devices such as sensors, or waveguides.

### STATE OF THE ART

Materials with multilayer structure feature important applications such as optical elements, as they act as interference filters or Bragg reflectors, capable of selectively reflecting or transmitting a range of electromagnetic frequencies, generally comprised between the ultraviolet and infra-red zones of the spectrum, determined by the thickness and index of refraction of the layers. Using a more recent terminology, these materials are mono-dimensional photonic crystals, since they feature a periodic modulation of the index of refraction in one of the three spatial directions.

The multilayer systems that are currently marketed are mainly manufactured by means of techniques that tend to be included under the name of physical vapour deposition. In all of them, the deposition is carried out in vacuum conditions and the solid condenses directly from the vapour phase. The optical coatings obtained by means of this type of techniques feature a great stability against variations of the ambient conditions as well as a great mechanical strength. There is another large group of multilayer formation methods based on sol-gel type processes. These methods have allowed the development of multilayer coatings with a great resistance to damage caused by intense radiation lasers, featuring much higher damage thresholds than other types of structures. They feature a poor mechanical stability and their properties vary with the ambient conditions, both phenomena related to the mesoporosity present, so they are not suitable as passive optical elements. However, applications can be found in other fields such as that of sensors. The pores of a swollen layer by means of sol-gel are typically irregular, with a very wide distribution of sizes and with an average size of between 2 and 100 nm. A multilayer structure with controlled mesostructure (size and shape) and whose optical properties could be controlled with precision would open new possibilities of application of this type of materials in different fields. Lastly, materials with relatively controlled mesoporosity have recently been developed and have awoken quite a deal of interest, although they still have not presented applications thereof. These are multilayer structures of porous silicon obtained through electrochemical etching.

The invention presented herein is more closely related to these latter two groups of materials and for this reason is described below in greater detail. In principle, none of these routes permit controlling the composition, the specific surface, the surface functionality and the porosity (size, shape and spatial pore distribution) of films with great precision with a large variety of compositions at the same time, or being processed in large surface substrates (for example, windows).

### Multilayer materials obtained by sol-gel, alternating dense layers of TiO₂ and SiO₂

The manufacturing techniques commonly used to synthesize micro-components in solid states are suitable for small areas, of the size of a wafer. If it is necessary to deposit thin sheets in larger sized areas, the sol-gel techniques (C. J. Brinker and G. W. Scherer, Sol- Gel Science : The Physics and Chemistry of Sol-Gel Processing. Academic, New York, 1990), feature big advantages: it is a simple method which permits one to deposit a wide variety of materials (oxides, semi-conductors, piezoelectrics, ferroelectrics, etc.) in the form of thin films on various substrates (polymers, ceramics, metals, etc.). The variety of materials that can be deposited allows for the design of sol-gel structures in the form of devices with photonic band-gap, or photonic crystals.

The Bragg reflectors, or BRs, in 1D are the photonic crystals that have reached the furthest development through sol-gel. Very high reflectivities are obtained in these materials due to the Bragg reflection phenomenon. In general, they are produced by alternating layers of materials that have high and low indices of refractions, forming a stack of dielectric layers.

The BRs synthesized by sol-gel can be obtained by spin-coating [ R. M. Almeida, S. Portal, Photonic band gap structures by sol-gel processing. Current Opinion in Solid State and Materials Science 7 (2003) 151. R. M. Almeida, A. S. Rodrigues, Photonic bandgap materials and structures by sol-gel processing, Journal of Non-Crystalline Solids 326&327 (2003) 405. P. K. Biswas, D. Kundu, and D. Ganguli, Preparation of wavelength-selective reflectors by sol-gel processing. J. Mater. Sci. Lett. 6 (1987) 1481] or by dip-coating. [Chen K. M., Sparks A. W., Luán H. C, Lim D. R., Wada K., Kimerling L. C, SiO2/TiO2 omnidirectional reflector and microcavity resonator via the sol-gel method. Appl. Phys . Lett. 75 (1999) 3805. Zhang Q., Li X., Shen J., Wu G., Wang J., Chen L., ZrO2 thin films and ZrO2 /SiO2 optical reflection filters deposited by sol-gel method. Mater. Lett. 45 (2000) 311. S. Rabaste, J. Bellessa, A. Brioude, C.Bovier, J. C. Plenet, R. Brenier, O. Marty, J. Mugnier, J.Dumas, Sol-gel fabrication of thick multilayers applied to Bragg reflectors and microcavities, Thin Solid Films 416 (2002) 242]. The difference between the n values of the materials which are used and the number of layers are the most important parameters of the BRs. By increasing the difference between the n of the layers and increasing the number of layers, the reflectivity of the photonic band gap, or PBG, is greater, wave length range prohibited between the UV and the NIR which are reflected by the dielectric mirror. In general, SiO*₂*, TiO*₂* and ZrO*₂* are used because of the big difference between their indices of refraction (1.45-1.52, 2.07-2.55. 2.1-2.2, respectively).

The problem with this type of synthesis lies in that upon increasing the number of layers, the risk that the material develops cracks which deteriorate the structural integrity of the multilayer is increased. In order to resolve this problem, Almeida *et al*. [R. M. Almeida, A. S. Rodrigues, Photonic bandgap materials and structures by sol-gel processing, Journal of Non-Crystalline Solids 326&327 (2003) 405.] and Rabaste *et al*. [Rabaste, J. Bellessa, A. Brioude, C. Bovier, J. C. Plenet, R. Brenier, O. Marty, J. Mugnier, J. Dumas, Sol-gel fabrication of thick multilayers applied to Bragg reflectors and microcavities, Thin Solid Films 416 (2002) 242] use very short thermal densification treatments at high temperatures (1000°C for 90s and 900°C for 2s, respectively), thereby being able to obtain stacking of up to 60 layers with thicknesses of between 80 and 100 nm, with a reflectivity greater than 99% (normal incidence). The thermal densification treatments are carried out after the synthesis of each one of the layers, and by using such high temperatures, this cannot prevent the crystallization of the TiO*₂* of the first layers, which are submitted to the higher temperatures for longer time periods because of the aforementioned thermal treatments that they undergo. The growth of the crystal must be controlled carefully, as it deteriorates the optical quality of the multilayer by introducing Rayleigh dispersion and because of the roughness that the interface generates with the SiO*₂* layers. Furthermore, the first layers undergo a different degree of densification than those of the final layers, which spend less time at high temperatures; this inhomogenous densification implies a lesser optical quality of the multilayer by modifying the optical thickness. [P. K. Biswas, D. Kundu, and D. Ganguli, Preparation of wavelength-selective reflectors by sol-gel processing. J. Mater. Sci. Lett. 6 (1987) 1481. Rabaste, J. Bellessa, A. Brioude, C. Bovier, J. C. Plenet, R. Brenier, O. Marty, J. Mugnier, J. Dumas, Sol-gel fabrication of thick multilayers applied to Bragg reflectors and microcavities, Thin Solid Films 416 (2002) 242].

### Porous silicon multilayers (pSi) obtained by electrochemical etching, alternating layers of different porosity

The possibility of producing stacking of porous silicon (pSi) layers of different porosity permits one to obtain structures with a predetermined profile of indices of refraction, which leads to an interferential multilayer filter or BR. The index of refraction of each layer is designed according to the porosity thereof, which is obtained by electrochemical etching of monocrystalline silicon wafers in an ethanol-hydrofluoric acid solution. In addition to the porosity, the thickness and, therefore, the optical properties can also be controlled, adjusting the synthesis conditions such as the acid concentration, the current density and the time of etching. [a) K. Kordás, A. E. Pap, S. Beke, S. Leppávuori, Optical properties of porous silicon. Part I: Fabrication and investigation of single layers. Optical Materials 25 (2004) 251. b) Part II: Fabrication and investigation of multilayer structures. Optical Materials 25 (2004) 257].

The pSi films are interesting because of their high specific surface area (200 m²/cm³), which can be used to collect and concentrate molecular species, and because of the considerable changes that their optical and electrical properties undergo when they interact with gases and fluids. An additional advantage of the porous silicon systems is that their surface can be chemically modified with elements of specific or non-specific recognition. C 23 (2003) 697. V. S. -Y. Lin, K. Motesharei, K. -P. S. Dancil, M. J. Sailor, M. R. Ghadiri, A porous silicon-based optical interferometric biosensor, Science 278 (1997) 840] The characteristics mentioned above make these materials very good candidates for chemical sensors [V. Torres-Costa, F. Agulló-Rueda, R. J. Martin-Palma, J. M. Martinez-Duart, Porous silicon optical devices for sensing applications, Optical Materials 27 (2005) 1084. T. Gao, J. Gao, and M. J. Sailor, Tuning the Response and Stability of Thin Film Mesoporous SiliconVapor Sensors by Surface Modification. Langmuir 18 (25) (2002) 9953. Snow, P.A.; Squire, E.K.; Russell, P.S.J.; Canham, L. T., Vapor sensing using the optical properties of porous silicon Bragg mirrors. J. Appl. Phys. 86 (1999) 1781] and biochemical sensors. [V. S. -Y. Lin, K. Motesharei, K. -P. S. Dancil, M. J. Sailor, M. R. Ghadiri, Science 278 (1997) 840].

In the form of BRs, a large number of layers can be obtained without the structural integrity problems that the multilayer films obtained by sol-gel have, and the thickness and porosity of each layer can be controlled very precisely. The main problem of these materials is their long-term stability. The application of the pSi BRs in air or aqueous mediums creates rust on the surface in just a few hours, which means that they must be chemically modified to increase their resistance to oxidation.

### EXPLANATION OF THE INVENTION

One object of the present invention constitutes a Process for preparing multilayers with an ordered mesoporous structure, which includes the following steps:
a) preparation of the precursor solution of a thin film layer, which is made up of I) a metal or organometallic precursor, ii) an inorganic acid, iii) a surfactant, iv) water and v) a volatilizable liquid medium.
b) ageing of said precursor solution.
c) deposit of said aged precursor solution in the form of thin mesostructured film on a substrate.
d) stabilization of the deposited thin mesostructured film and preparation thereof to support the deposit of new layers of thin mesostructured film.
e) repetition of steps b and c, and if necessary, prior preparation and ageing of a different precursor solution, until achieving the number of layers desired.
f) elimination of the surfactant molecules incorporated in the precursor solution and which act as mesopore moulds, creating a multilayer mesoporous film. Optionally, the Process can include a step of adding organic molecules which selectively modify the porous surface of one or more mesoporous layers, said step can in turn include several successive sub-steps of sorption and washing at the same time.
The precursor solution contains:
i) an inorganic precursor of chloride type MCl₄ or alkoxide M(OR)₄, preferably selecting the metal M from amongst Si, Ti, Zr, Si, Nb, V, Ce, or Hf and the R groups from amongst ethoxide, propoxide, iso-propoxide or n-butoxide.
ii) an inorganic acid, preferably Hcl, HNO or Hcl₄.
iii) a surfactant, preferably a non-ionic surfactant, more preferably an alkyl-poly(oxyethylene) diblock copolymer) (i.e., alkyl-PEO) or triblock (PEO)ₙ (PPO)₁ₙ (PEO)ₙ, (PPO is polyoxide propylene)
iv) water and
v) a volatilizable liquid medium which is preferably selected from amongst a low-weight molecular alcohol such as methanol, ethanol, propanol, i-propanal, n-butanol, an ether, a cyclic ether such as tetrahydrofuran, or a mixture of the previously mentioned solvents in any proportion.

A mixture of the precursor type chloride MCl₄ or alkoxide M(OR)₄ can be used with an organometallic precursor Si(OR)₄₋ₓR'ₓ, or Si(OR)₃R'Si(OR)₃ where the R groups are preferably selected from amongst ethoxide, propoxide, iso-propoxide or n-butoxide, and the R' group is an organic residue wherein the first C atom of the chain is bonded to the Si atom, with R' preferably being selected from amongst phenyl, phenyl substitute, alkyl, alkylamine, alkylthio, alkynyl, or polymerizable residues such as alkylnitrile, allyl, vinyl, acrylates, methacrylates or their derivatives.

The proportions between the reagents are comprised between the following ranges:
i) inorganic precursor in proportion of between 1.0x10⁻³ mole/dm⁻³ and 1.0 mole/dm⁻³ of solution.
ii) inorganic acid in proportion of between 1.0x10⁻³ mole/dm⁻³ and 5.0 mole/dm⁻³.
iii) surfactant in proportion of between 1.0 g/dm⁻³ and 50.0 g/dm⁻³.
iv) water in proportion of between 1.0x10⁻⁴ mole/dm⁻³ and 10 mole/dm⁻³.
v) volatilizable liquid medium in proportion of between 5 g and 100 g for each 0.01 mole of inorganic precursor.

Once prepared, the precursor solution is aged under mechanical agitation at temperatures of between 20° and 60°, for a time period of between 20 minutes and 8 days.

The substrate whereon the aged precursor solution is deposited in the form of thin nanostructured film is any chemically inert material which can be soaked in a hydroalcoholic solution, being preferably selected from amongst sheets of glass, quartz, silicon wafer or doped silicon, conductive glasses (ITO or FTO), potassium bromide, calcium fluoride, or hydrophilic polymers, including polymer conductors. Prior to depositing the first film, the substrate is sequentially washed in water, ethanol and acetone.

The depositing of the films can be carried out by means of dip-coating at temperatures between 22°C and 32°C, under an atmosphere of controlled humidity, preferably between 20% and 50% relative humidity, at stirring speeds of the substrate of between 0.1 and 5 mm/s, preferably of between 0.5 and 2 mm/s, and drying times of between 10 seconds and 30 minutes, depending on the relative humidity, or by means of spin-coating at temperatures of between 22°C and 32°C, under an atmosphere of controlled humidity, preferably between 20% and 50% relative humidity, at turning speeds of between 1 revolution per second and 200 revolutions per second, for a time period of between 10 seconds and 20 minutes.

The stabilization of the thin mesostructured film is made up of the following steps:
a) maintenance of the films at a constant relative humidity (RH) of between 40% and 70%, preferably at 50% for 2 to 36 hours
b) heating in an oven at 50-90°C for a period of 2 to 48 hours
c) heating in an oven at 100-150°C for a period of 2 to 48 hours
d) heating in an oven at 150-200°C for a period of 2 to 48 hours, preferably from 2 to 6 hours.

Alternately repeating the steps of deposit and stabilization, one can achieve the depositing of a number of layers of between 2 and 20.

Lastly, the surfactant molecules incorporated in the stabilized multilayer film must be eliminated, which can be carried out by means of heating of the substrate-film system at 350-500°C for a period of 2 to 24 hours, increasing the temperature at a rate of 0.1 to 10°/minute until the maximum temperature selected, or by means of extraction in solutions of an inorganic acid, preferably HCl, HNO₃ or HClO₄ with a concentration of between 10⁻⁴ and and 1.0 moles of acid per litre of solution, in a hydroalcoholic solution of water/alcohol of low molecular weight selected from amongst methanol, ethanol, propanol, i-propanol or butanol, mixed in any proportion.

If the Process includes the addition of organic molecules which selectively modify the porous surface of one or more mesoporous layers, this is carried out by means of the following steps:
a) immersion, for a time period of between 10 minutes and 240 hours and at ambient temperature, of the multilayer with mesoporous structure in a solution that contains at least one bifunctional molecule R'-G, constituted by an anchor group G and a functional group R', and a solvent at a concentration of between 10⁻⁵ and 0.1 mole per litre.
b) washing with the same solvent used to prepare the solution.

The anchor group G of the bifunctional molecule is preferably selected from amongst trialkoxysilane, trichlorosilane, phosphate, phosphonate, polyphenyl, carboxylate, acetylacetonate, aldehyde, amine and thiol and the solvent is preferably selected from amongst water, alcohols or ethers of low molecular weight.

An object of the present invention also constitutes a multilayer material with ordered mesoporous structure, which features a number of layers of between 2 and 20, which are transparent in the visible and close infra-red ranges, are free of cracks and feature:
a) a thickness of between 30 and 300 nm,
b) an adjustable surface area of between 150 and 800 m²/g,
c) a porosity of between 10 and 60%, and
d) a pore diameter of between 2 and 15 nm

The composition of each layer corresponds to an inorganic oxide, or to an organic-inorganic hybrid material type M₁₋ₓ(RSi)ₓO_{2-x/2}, where 0 ≤ x ≤ 0.5 or to a superficially modified oxide of type M(R-G)ₓO₂, where R is a functional group, 0 ≤ x ≤ 0 and G is an anchor group.

The multilayer materials with ordered mesoporous structures object of the present invention feature an optical reflection peak, or the corresponding fall in optical transmission, of some range of photonic frequencies of the visible or close infra-red spectrum, whose position depends on the thickness and index of refraction of each one of the layers which constitute the material and whose origin is in the phenomenon of interference of the light beams reflected in each one of the interfaces present in the multilayer structure.

These materials can be obtained by means of the Process object of the present invention and can be used as optical sensors, in telecommunications and waveguides. Furthermore, this multilayer material as optical sensor varies upon detecting a compound in liquid or gas phase (Example 2).

### DESCRIPTION OF THE FIGURES

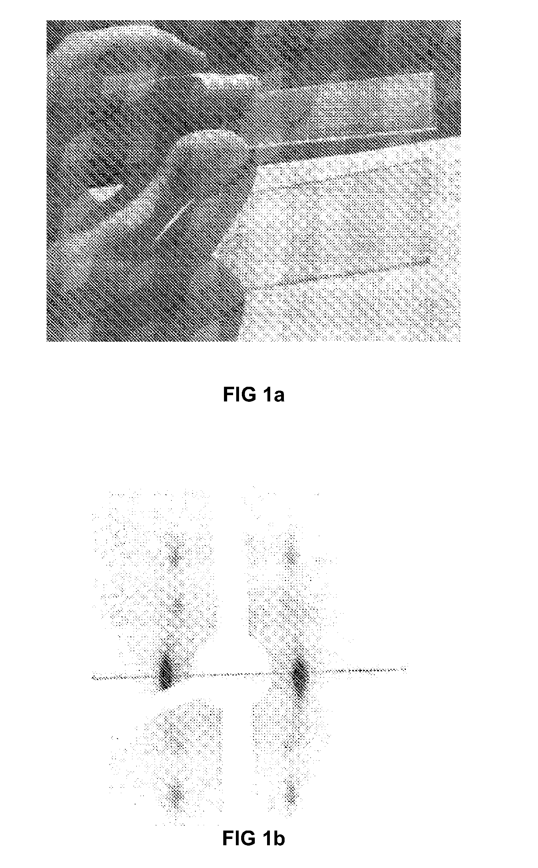

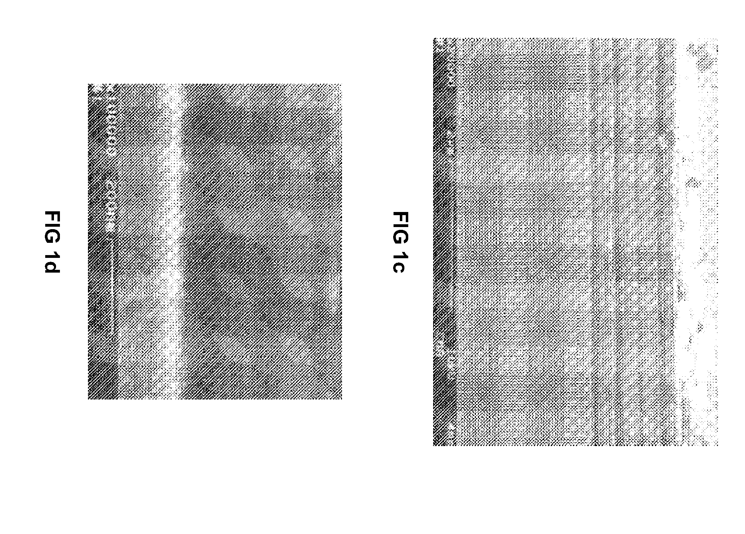

Figure 1 a) Photograph of a multilayer film (0.6 mm/s, 8 alternate layers of mesoporous SiO₂ and TiO₂, on glass), which shows the transmission and reflection of the light. b) SAXS diagram of a multilayer system wherein layers of SiO₂ and TiO₂ are alternated, and whose porous systems have been moulded with the non-ionic surfactant F127 (8 layers, 1.8 mm/s, on thin glass). c) FE-SEM Micrography of a multilayer film (0.6 mm/s, 8 alternate layers of mesoporous SiO₂ and TiO₂, on Si), d) close-up wherein the porosity of the layers constituting the multilayer system can be observed.

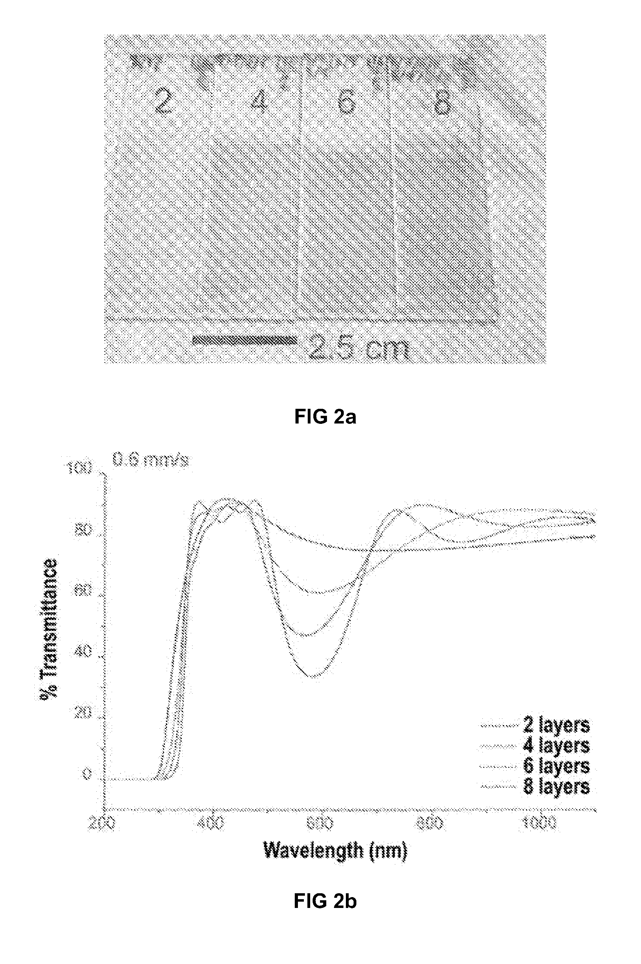

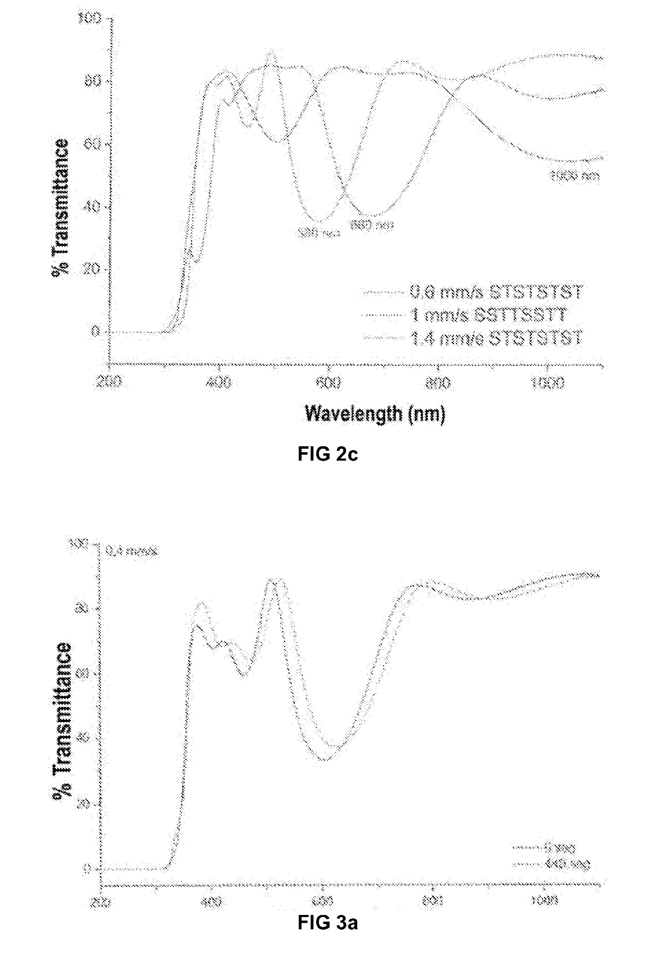

**Figure 2** a) Digital photograph of multilayer films wherein 2, 4, 6 and 8 alternate layers of mesoporous SiO₂ and TiO₂ are successively deposited, on glass; speed of dip-coating: 0.6 mm/s. b) UV-visible spectra of multilayers of the systems of figure 2a. c) Optical transmission spectra in the UV-Vis range showing the control of the position of the PBG by means of the variation of the thickness of the films; the denomination STSTSTST implies, for example, 8 alternate layers of mesoporous SiO₂ and TiO₂, deposited at the speed indicated in the graph.

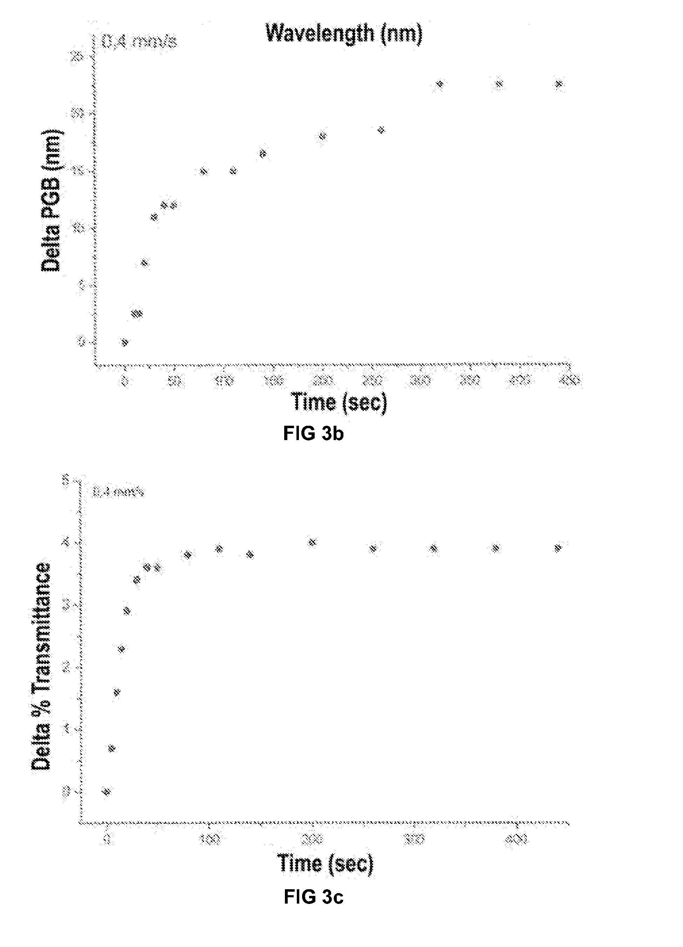

**Figure 3** a) Optical transmission spectra in the UV-visible range of an 8-layered ST film, deposited at 0.4 mm/s, where the displacement of the PBG after the exposition of the film to water vapour is observed. Variation of the PBG position (b) and of the minimum transmittance (c) for this film over the course of the time it is exposed to vapour.

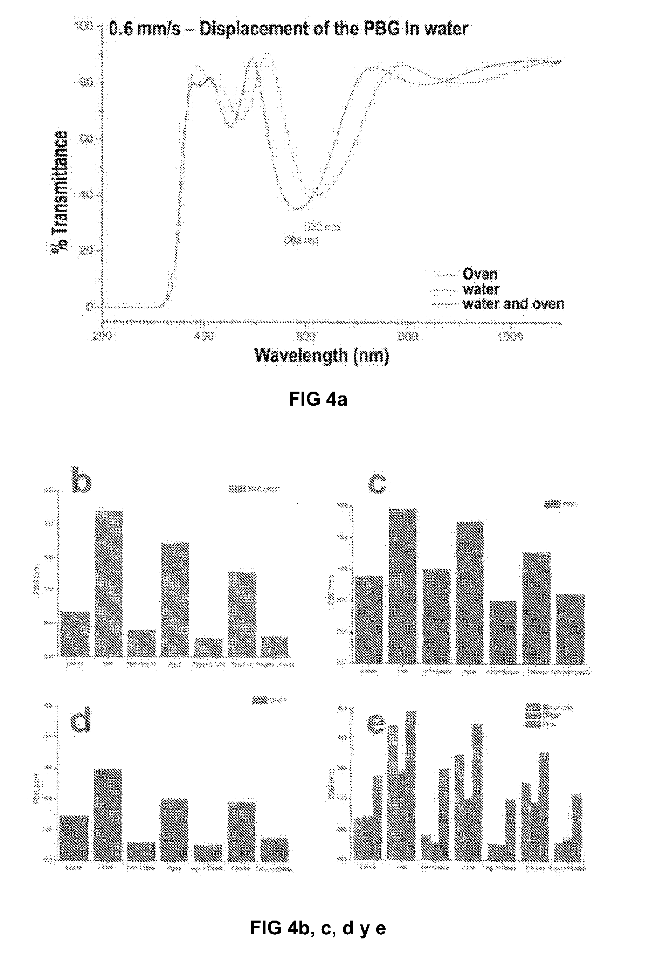

**Figure 4** a) UV-visible spectra of an 8-layered system deposited at 0.6 mm/s, wherein the reversibility of the signal once the film is exposed to water and treated in an oven is observed. b) Position of the PBG in the film from point a), when this is submitted to various treatments with different solvents. c) Position of the PBG in the film from point a), functionalized on the surface with phenyl groups when this is submitted to various treatments with different solvents. d) Position of the PBG in the film from point a), functionalized on the surface with hexadecyl groups, when this is submitted to various treatments with different solvents. e) Collection of the data shown in b-d, wherein a selective response of the film against different solvents is observed.

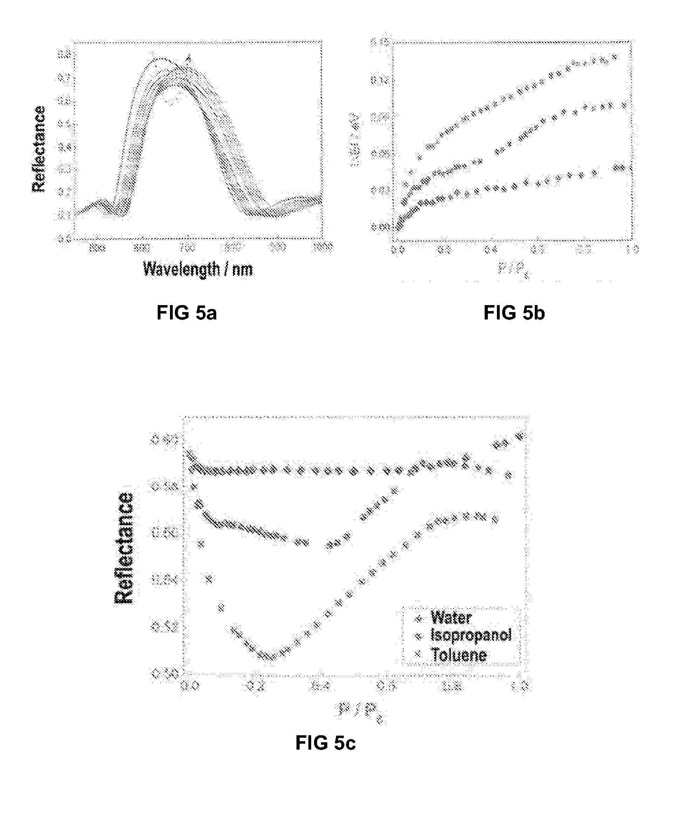

**Figure 5** (a) Specular reflectance spectra at different partial toluene vapour pressures (the direction of the arrow indicates increase of the vapour pressure). Evolution of the maximum spectral position (b) and its intensity (c) for the three solvents used in the sorption experiments.

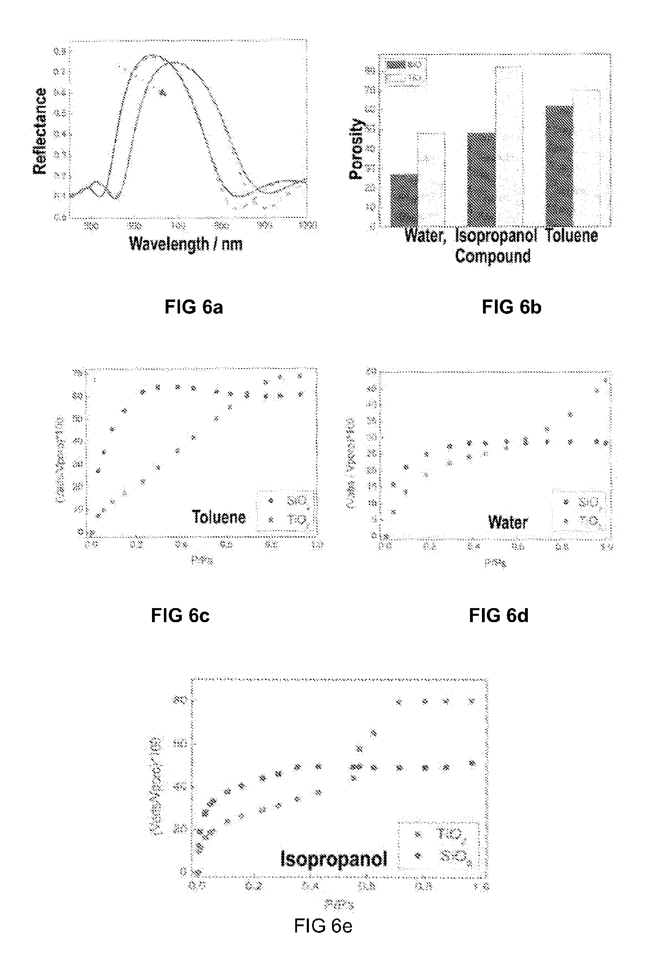

**Figure 6** (a) Theoretical adjustment of the reflectance spectra of an 8 layer multilayer. The adjustments are presented in vacuum and after exposing the multilayer to a partial toluene pressure of p/pS=0.93. (b) Variation of the porosity for the layers of SiO2 and TiO2 with three different solvents, at pS. Variation of the volumetric fraction of vapour absorbed in SiO2 and TiO2 according to the partial pressure of said vapour, being (c): toluene, (d) : water and (e): isopropanol.

### DETAILED DESCRIPTION OF THE INVENTION

An object of the present invention constitutes a Process for preparing mesoporous multilayers, which features a prohibited adjustable band in the interval of close visible-infra-red light, typical of photonic crystals. Due to the porosity, the position of the band can change according to the presence of certain molecules on the surface or in the interior of the pore, whether it is because the film has been submerged in a solution of said molecule, or because said molecule is present in the ambient medium. The preparation Process includes the following steps:
a) Preparation of the precursor solution of a thin layer of film, which is made up of i) a metal or organometallic precursor, ii) an inorganic acid, iii) a surfactant, iv) water and v) a volatilizable liquid medium. The solution must be submitted to an ageing treatment in specific temperature and time conditions, with the aim of optimising the chemical processes of hydrolysis and condensation, as has been reported in the literature,
b) The depositing of a thin mesostructured film on a substrate by means of dip-coating or spin-coating, in optimal temperature, speed and ambient humidity conditions, in order to regulate its thickness, type of mesostructure and compositional uniformity,
c) The post-treatment of the deposited thin mesostructured film, with the aim of consolidating the inorganic walls, optimising the separation of phases with leads to the mesopores, and preparing the deposited film to support the depositing of a new layer of thin mesostructured film.
d) The repetition of step c) until achieving the number of layers desired,
e) The elimination of the surfactant molecules used as pore mould, through controlled calcination, or through extraction, creating a mesoporous multilayer film, and
f) The addition of organic molecules which selectively modify the porous surface of one or more mesoporous layers of the mesoporous multilayer film thus obtained. This step, in turn, can be made up of several successive steps of sorption and washing.

The precursor solution contains i) an inorganic precursor of chloride type MCl₄ or alkoxide M(OR)₄. Preferably, the metal M is selected from amongst Si, Ti, Zr, Si, Nb, V, Ce, Hf; The R groups are preferably selected from amongst ethoxide, propoxide, iso-propoxide or n-butoxide. Alternatively, a mixture of the previous precursor can be used with an organometallic precursor Si(OR)₄₋ₓR'ₓ, where the R groups are preferably selected from amongst ethoxide, propoxide, iso-propoxide, n-butoxide, and the R' group is an organic residue wherein the first C atom of the chain is bonded to the atom of Si; R' is chosen from amongst a large variety of groups, preferably phenyl, phenyl substitute, alkyl, alkylamine, alkylthio, alkynyl, ..., ii) an inorganic acid, preferably HCl, HNO₃ or HCl₃, a surfactant, preferably a non-ionic surfactant, preferably an alkyl-poly(oxyethylene) diblock copolymer) (i.e. alkyl-PEO) or triblock (PEO)ₙ (PPO)₁ₙ (PEO)ₙ, (PPO is polyoxide propylene), iii) water and iv) a volatilizable liquid medium which is selected from amongst a low-weight molecular alcohol such as methanol, ethanol, propanol, i-propanal, n-butanol..., an ether, a cyclic ether such as tetrahydrofuran, or a mixture of the previously mentioned solvents in any proportion. The solution must be aged under mechanical agitation at temperatures of between 20° and 60° for time periods of between 20 minutes and 8 days with the aim of optimising the chemical processes of hydrolysis and condensation. The proportions between the reagents are similar to those reported in the literature (Yang, P.; Zhao, D.; Margolese, D. I.; Chmelka, B. F.; Stucky, G. D. Nature 1998, 396, 512; E. L. Crepaldi et al., Journal of the American Chemical Society, 2003, 125, 9770).

The substrate whereon the films are to be deposited can be any chemically inert material which can be soaked in a hydroalcoholic solution. The substrate can be selected from amongst sheets of glass, quartz, silicon wafers or doped silicon, conductive glasses (ITO or FTO), potassium bromide, calcium fluoride, or hydrophilic polymers, including polymer conductors. For the washing of the substrate, aqueous solutions and detergent are used. Prior to depositing the first film, the substrate is sequentially washed in water, ethanol and acetone.

The depositing of the layers can be carried out by means of dip-coating or spin-coating at temperatures of between 22 and 32°C, under an atmosphere of controlled humidity, preferably between 20 and 50% relative humidity (RH). In the case of dip-coating, stirring speeds of the substrate of between 0.1 and 5 mm/s, preferably of between 0.5 and 2 mm/s, are used, and drying times of between 10 seconds and 30 minutes, depending on the HR. In the case of spin-coating, speeds of between 1 revolution per second and 200 revolutions per second are used, for a time period of between 10 seconds and 20 minutes.

Once a layer has been deposited, it must be submitted to a stabilization treatment with the aim of consolidating the inorganic walls by means of the promotion of the condensation, and promoting the separation of polymer-inorganic network phases. The beginning of this post-synthesis treatment to permit a suitable formation of the porous system has been described, for example, in Crepaldi et al. *New Journal of Chemistry* 2003, 27 (1), 9. The treatment described herein has also been designed to optimise the condensation of each layer. This point is essential to prevent the dissolution of each layer during the deposit of the next layer. The typical thickness of these layers is in the 30-300 nm range; the typical porosity, between 10 and 60%.

The post-synthesis stabilization treatment is made up of several steps, to which a recently synthesized layer is submitted: 1) maintenance of the constant RH of between 40% and 70%, preferably at 50% for 2 to 36 hours, 2) heating in an oven at 50-90°C for a period of 2 to 48 hours, 3) heating in an oven at 100-150°C for a period of 2 to 48 hours, 4) heating in an oven at 150-200°C for a period of 2 to 48 hours, preferably from 2 to 6 hours.

After the stabilization treatment, a new layer of identical composition can be deposited on the previous one, depending on the metallic centres present in the precursor solution. The particular mechanical properties of these mesoporous films permit the preparation of multilayer films of up to 10 or more layers, depending on the thickness of each one (see examples). These multilayer films are free of cracks, are transparent in the visible range and feature an absorption band in the visible and infra-red spectrum, whose position can be controlled by means of the control of the thickness and of the index of refraction of each one of the layers that make up the multilayer. Said absorption band becomes more intense and narrower as the number of alternated layers increases (see M. Francon, Optimal Interferometry, Academic Press, 1966).

The surfactant present in the multilayer systems is eliminated by heating the substrate-film system at 350-500°C for a period of 2 to 24 hours; in order to prevent thermal shocks, the temperature is increased by 0.1 at 10°/minute until reaching the calcinate temperature selected. Alternatively, a stabilized multilayer system can be submitted to extraction of the surfactant in solutions of an inorganic acid, preferably HCl, HNO₃ or HClO₄ of concentration of between 10⁻⁴ and 1.0 moles of acid per litre of solution, in a hydroalcoholic solution of water/alcohol of low molecular weight selected from amongst methanol, ethanol, propanol, i-propanol or butanol, mixed in any proportion. This gives a result of a mesoporous multilayer film of inorganic oxides, which features an intense absorption in a selectable region of the visible or close infra-red spectrum. The composition of each layer can be an inorganic oxide, or an organic-inorganic hybrid material type M1-x(R-Si)xO₂-x/₂, where 0 ≤ x ≤ 0.5. The surface area of these multilayers can be adjusted from between 150 and 800 m²/g; the pore diameter can be adjusted from between 2 and 15 nm according to the surfactant used as pore mould.

Additionally, organic functions can be incorporated to the surface of a type of layers, by a post-synthesis treatment, similar to what has been described in Angelomé and Soler-IIIia, Journal of Materials Chemistry 2005, 15, 3903. For this purpose, bifunctional molecules are used, with an anchor group selected from amongst trialkoxysilane, trichlorosilane, phosphate, phosphonate, polyphenyl, carboxylate, acetylacetonate, aldehyde, amine and thiol..., and a functional organic group bonded to the anchor group by means of a covalent bond. The anchor group can be selected so that it is bonded by a covalent bond or by means of a coordination bond to the surface of one of the oxides, or to a group previously bonded to the surface of the oxide. This bifunctional molecule is dissolved in a suitable solvent (water, alcohols, etc.), in a concentration of between 10⁻⁵ and 1.0 mole per litre. In order to include the molecule in the film, a multilayer film is submerged in this solution for a time of between 10 minutes and 4 hours, at ambient temperature; subsequently, it is washed with the same solvent used to prepare the solution. It has been shown that this Process permits the selective addition of an organic function to this type of layer (Angelomé et al. Adv. Mater, 2006, in press).

The multilayer materials object of the present invention feature the following advantages of the porous systems with respect to dense sol-gel multilayer systems:
1) The most notable advantage is that the materials are porous, with accessible and interconnected pores, and have a large surface area.
2) In order to obtain a large number of dense layers without cracks through sol-gel, a densification treatment at high temperatures (900-1000°C for a few seconds) is needed, so that the compression tensions which are created in the SiO₂ layers partially compensate for the traction tensions which are produced in the TiO₂ layers. By means of the Process of the present invention, the organic material is maintained until synthesizing the final layer, which increases the tenacity of the multilayer and prevents the need to calcinate each one of the layers at high temperatures (there is only one calcination phase, at low T).
3) This treatment at high temperatures produces crystallisation of the TiO₂, and if the size of the crystals increases, it produces Rayleigh dispersion, which deteriorates the optical quality of the multilayer. In order to resolve this problem, Almeida and Rabaste propose very short thermal treatments at high temperatures, which makes densification possible, prevents the formation of cracks due to the state of stress that they achieve and permit the production of very small anatase crystals (less than 45 nm). In the materials object of the present invention, both oxides remain amorphous because of the low thermal treatment temperatures, preventing the drawbacks which are created by the growth of the anatase crystals.

Below, the advantages of the porous systems through sol-gel are listed with respect to the pSi systems through electrochemical etching:
1) The multilayers are formed by porous oxides, which with respect to pSi, are resistant to corrosion and high temperatures.
2) Furthermore, as opposed to the pSi, the multilayer materials are porous but are also formed by layers of materials which have a different surface chemical, and can be selectively functionalized, increasing the potential applications.
3) Another advantage with respect to the p-Si, is that with the surfactants the size and order of the pores can be regulated, in addition to the fact that the structure is accessible and interconnected.
4) Finally, by using the sol-gel method, ions from rare soils, organic molecules, semi-conductor nano crystals, etc., can be homogeneously included in the material.

### EXAMPLE OF EMBODIMENT OF THE INVENTION

Details of the different steps of the Process are indicated below, as well as an example.

### Preparation of the substrates

The main substrates used are 25 x 60 mm optical glass microscope slides. The glasses were washed with water and washing liquid, then with de-ionized water and finally with acetone. For the SAXS measurements, the films were deposited on 25 x 60 mm glass cover slips, and for the FE-SEM micrographs silicon was used as a substrate, cut in 20 x 30 mm rectangles. Both substrates were washed in similar fashion to that of the microscope slides.

### Preparation of the solutions

To prepare the mesoporous silicon oxide, tetraethoxysilane (TEOS) was added to the EtOH under agitation, then the structuring agent (F127) was added and finally the mixture of HCl and water was added. The solution, hereinafter called solution A, was stirred between each addition until its complete homogenisation and was left stirring at ambient temperature in a sealed container for 48 hours. The solutions thus prepared were kept in a freezer (-5°C) until their use. The proportions used, in moles, were TEOS:F127:EtOH:H₂O:HCl 1:0.005:40:18:0.008, according to preparation reported in the bibliography [Soler-IIIia, G.J.A.A.; Crepaldi, E.L.; Grosso, D.; Durand, D.; Sanchez, C., Chem. Commun. 2002, 2298].

As precursor to the mesoporous titanium oxide a solution of 9.5% m/m of TiCl₄ in ethanol was used. The surfactant (F127: H-(C₂H₄O)₁₀₆-(C₃H₆O)₇₀-(C₂H₄O)₁₀₆-OH) was added under stirring and the resulting solution was heated at 35°C for 10 minutes until complete dissolution of the polymer. Then, at ambient temperature, the water was added in drops, and the final solution, called solution B, was left stirring in a sealed container for 30 minutes. The solutions thus prepared were kept in freezer (-5°C) until their use. The proportions used, in moles, were TiCl₄:F127:EtOH:H₂O 1:0.005:40:10, according to preparation reported in the bibliography [Crepaldi, E.L.; Soler-IIIia, G.J.A.A.; Grosso, D.; Ribot, F.; Cagnol, F.; Sanchez, C., J. Am. Chem. Soc. 2003, 125, 9770].

### Preparation of films by dip-coating

The films were synthesized by dip-coating. The equipment for the manufacturing of the films (dip-coater) is formed by a metal frame with a mobile ascending-descending headpiece. The headpiece is directed by a screw, which is mobilised by an continuous current electrical motor. The speed of the motor is regulated by means of a variable voltage source. The equipment is located inside an acrylic chamber, which permits the modification of the relative humidity wherein the film is made and eliminates the air currents.

After the washing, the substrate is attached to the mobile headpiece and a glass of precipitates with the precursor solution is placed underneath. To obtain a film, the substrate is submerged in the solution and raised with a controlled speed. The solvent is left to evaporate inside the chamber for several minutes, one of the sides of the substrate is cleaned with ethanol (in the event of using it for optical measurements) and then the film/substrate system is submitted to the stabilization and calcination post-treatments. The temperatures of the solutions during the dip-coating process were 25°C for solution A and 35°C for solution B. For both solutions, a relative humidity of 50% was used inside the chamber. The speed of dip-coating, which mainly regulates the thickness of the film, varied from between 0.4 and 1.8 mm/s.

The post-treatment was made up of the stabilization and subsequent calcination of the films. The stabilization was carried out in three steps. First, the films were placed in a fixed humidity chamber at 50% (controlled by a saturated aqueous solution of Ca(NO₃)₂.4H₂O). Then, the films were placed in an oven at 60°C and finally in an oven at 130°C. Each one of these steps lasted for between 1 and 2 days. The stabilized films were calcinated for 2 hours at 200°C in a tubular ORL oven, with DHACEL DH 100 controller and air atmosphere. The first layer is obtained in this manner.

The multilayer films are made in the following way: the first layer is deposited (using solution A), which was stabilized and calcinated for 2 hours at 200°C, and then, the second layer was deposited thereon (using solution B), which underwent the same treatment. This treatment is necessary to prevent the dissolution of the first layer when depositing the second layer. The third layer was formed from solution A, and continuing in this way. The polymer is not eliminated from the multilayer until the final calcination. Once the hybrid multilayer is obtained with the number of layers desired (between 2 and 10), this is calcinated in the tubular oven. The final calcination consisted of a heating ramp of 1°C/min from 25° until the calcination temperature, 350°C. The multilayers were maintained at that temperature for 2 hours, and were left to cool inside the oven until reaching ambient temperature. After the calcination of the material, a mesoporous multilayer formed by alternate amorphous layers of SiO₂ and TiO₂ are obtained, with ordered mesoporous structure (lm3m), and variable thicknesses of between 30 and 300 nm.

### Functionalization of the films

Organic functions which give desired characteristics (hydrophobicity, adsorption of heavy metals or of photolabile complexes, etc.) can be added to each one of the mesoporous oxide layers. This process, hereinafter called selective functionalization, can be carried out by means of two processes: pre-functionalization and post-functionalization.

The general processes of pre-functionalization of thin mesoporous films are described in the literature (see Soler-IIIia and Innocenzi, Chem. Eur. J. 2006, 12, 4478, and references cited therein). The generally consist of making a metallic precursor MXₙ, such as those described above, react with a functional organometallic precursor SI(OR)₄₋ₓR'ₓ. In this way, it is possible to create an organic-inorganic hybrid skeleton M(SiR')ₓO_{2-x/2} by means of suitably controlled hydrolysis-condensation processes. To this end, the reagents of both precursors must be controlled, as they depend on their chemical nature, the concentration in solution, the pH of the average, the time and temperature of ageing of the solutions, etc. In this method, the organic functions can be localized on the surface of the pores, in the interior of the walls, or in both places.

The anchoring of the molecules on the surface of the pores makes the derivatization of the films by post-functionalization possible. In this case, the functions are added to the surface of the pores. The modification is carried out by means of the adsorption of bifunctional molecules, with an anchor group which bonds to the surface of the pores by complexation of the metal (for example, of the Ti(IV)), and the functional group desired. In the examples, groups that are easily detectable by spectroscopic techniques were used, in order to be able to follow the adsorption of said molecule in time (P.C. Angelomé, G.J.A.A. Soler-IIIia, J. Mater. Chem. 2005, 15, 3903).

The post-functionalization is carried out by means of the immersion of calcinated multilayer films, synthesised on microscope glass slide substrates, in a solution of 0.01 M of dihexadecylphosphate (hereinafter, DHDP) in THF or in a solution of phenylphosphonic acid (hereinafter, PPA), for variable times of between 4 and 24 hours.

The films with functions and without them were submerged in different solvents (water, THF and toluene) for variable times of between 1 and 10 minutes, to evaluate the displacement of the PBG using a UV-visible spectrophotometer with diode repair.

### Characterization of the films

The multilayer mesostructured films deposited on slides were structurally characterized by two-dimensional SAXS at the National Synchrotron Light Laboratory (Campinas, SP, Brazil) (λ=1.608 A; sample-detector distance of 650 mm). The repairs of characteristic points of cubic lm3m structures, two-dimensional p6m hexagonals, centred c2m rectangles, three-dimensional p6₃ hexagons, cubic la3d or Pm3n, were observed and identified.

An FE-SEM Zeiss Leo 982 Gemini microscope was used to observe the transversal section of the multilayers, deposited on silicon, with metallizing. In the micrographs, the uniformity of the layers that form the multilayer is observed, and the porosity of each layer can be observed in detail. The thickness measurements of the layers were obtained from these micrographs.

The optical properties were studied with a Hewlett Packard 8453 spectrophotometer in transmission, between 200 and 1100 nm. The films, synthesised on glass on one of the faces, were directly placed on the sample container and the spectra were obtained with normal incidence to the substrate.

The digital photographs were obtained with a Kodak digital camera.

### Example 1

When the preparation Process is carried out in accordance with the following specific conditions:
a) Preparation of an Si(OEt)₄ solution in a mixture of acidified ethanol/water at a pH of 2, stirred for 48 hours, using a non-ionic surfactant of type Pluronics F127 (EO)₁₀₆(PO)₇₀(EO)₁₀₆, where EO=-CH₂CH₂O- and PO=-CH₂CH(CH)₃O- in molar proportions Si:H₂O:Ethanol:HCl:F127 1:2-10:15-50:0.01-0.1:3-7x10⁻³ (solution A) and a solution of TiCl₄, in an ethanol/water mixture, using a non-ionic surfactant F127, in molar proportions Ti:H₂O:ethanol:F127 1:4-20:15-50:3-7x10⁻³ (solution B).
b) Deposit on a substrate of a thin film by dip-coating of Solution B, at an extraction speed of 0.6 mm/s, at an RH of 40 to 50%. stabilization of the monostructured film of TiO₂ resulting from exposition to 50% RH controlled for 24 hours, followed by successive thermal treatments for 24 hours at 60° and 130°C, finally a thermal treatment at 200°C for 2 hours.
c) Deposit on a substrate of a thin film by dip-coating of Solution A, at an extraction speed of 0.6 mm/s, at an RH of 40 to 50%. stabilization of the monostructured film of TiO₂ resulting from exposition to 50% RH controlled for 24 hours, followed by successive thermal treatments for 24 hours at 60° and 130°C, finally a thermal treatment at 200°C for 2 hours.
d) Repetition of steps b) and c) at least 3 times.
e) Calcination of the resulting multilayer film for 2 hours at 350°C, with a heating ramp of 1°C/min.

A thin mesoporous multilayer is then obtained, wherein each one of the TiO₂ layers has an index of refraction of between 1,640 and 1,670, a weight of 113±4 nm, a porosity of between 38 to 41% in volume, an ellipsoidal pore size of 10 x 4 nm, which form a pore repair derived from a cubic lm3m structure. For its part, each one of the SiO₂ layers has an index of refraction of between 1,220 and 1,290, a thickness of 40±4 nm, a porosity of 36 to 45% in volume, an ellipsoidal pore size of 10 x 5 nm, which form a pore repair derived from a cubic lm3m structure. An thin 8-layer mesoporous multilayer features a centred absorption in 563 nm, T=0.30 (figure). Upon being exposed, this thin mesoporous multilayer at water vapour (RH 100%), the band is displaced and centred at 585 nm, T=0.37. Upon being exposed, the thin mesoporous multilayer at a dry atmosphere (130°C, 30 minutes), the peak returns to its original position.

### Example 2

The optical properties of the porous photonic crystals presented can be used to quantify the sorption of solvents of different characteristics inside the multilayers. Measurements of optical reflectance are made depending on the partial vapour pressure of several solvents to analyse the interrelation between affinity and accessibility of the different types of layers within the structure.

A multilayer of 8 alternating layers of SiO₂ with small pores (3 nm, moulded with CTAB) and TiO₂ with large pores (10-12 nm, moulded with F127) was studied. To do that, the multilayer was introduced inside a chamber, where inside the partial vapour pressure could be varied between 0 and 1. The chamber has a quartz window wherethrough reflectance spectra were measured in situ at normal incidence with a Bruker IFS-66 FTIR spectrophotometer. The multilayers were submitted to toluene vapours, water and isopropanol, and as an example the series of spectra obtained for partial toluene variable pressures are shown in figure 5.a. Furthermore, figures 5.b and c present the variation of the maximum spectral position together with its intensity for the three solvents studied, observing a marked difference in the optical behaviour of the multilayer against the different solvents. The water seems to be adsorbed indistinctly and at the same time on the silicon or titanium walls, while the isopropanol and even more so the toluene are preferentially adsorbed on silicon during the first steps of the process and on recent titanium at high partial pressures.

Quantitative information about the variation of the index of refraction according to the vapour pressure can be extracted from the analyses of the optical reflectance spectra. Theoretical adjustments of the reflectance spectra obtained were made to determine the variation of the index of refraction of each type of layer (SiO2 or TiO2) independently, as the solvent was introduced in the structure. In figure 6.a, an example of the adjustments obtained for a multilayer in vacuum (10-2 torr) and for a partial toluene pressure of 0.93 are presented.

The evolution of the volume adsorbed could be determined from the index of refraction data by using the Bruggeman approximation for three components (oxide-liquid-air). For each solvent studied, the curves of volume adsorbed according to the relative vapour pressure are presented, discriminating for the layers of silicon or titanium (Figures 6.c, d and e). Finally, in Figure 6.b, the variation of the porosity for the same multilayer at saturation pressure of the three solvents studied is shown.

Both the accessibility to the multilayer system and the affinity of each type of layer for a solvent determine the comprehensive sorption properties and the variation of the resulting optical properties, with potential applications in optical sensors.

## Claims

1. Process for preparing multilayers with an ordered mesoporous structure **characterized in that** it includes the following steps:
a) preparation of the precursor solution of a thin layer of film, which is made up of i) a metal or organometallic precursor, ii) an inorganic acid, iii) a surfactant, iv) water and v) a volatilizable liquid medium.
b) ageing of said precursor solution,
c) depositing of said aged precursor solution in the form of a thin mesostructured film on a substrate,
d) stabilization of the deposited thin mesostructured film and preparation thereof to support the depositing of new layers of thin mesostructured film
e) the repetition of steps b and c, and if necessary, prior preparation and ageing of a different precursor solution, until achieving the number of layers desired, and
f) elimination of the surfactant molecules incorporated in the precursor solution and which acts as a mesoporous mould, creating a multilayer mesoporous film.

2. Process for preparing multilayers with an ordered mesoporous structure according to claim 1, **characterized in that** it includes a step of adding organic molecules which selectively modify the porous surface of one or more mesoporous layers, said step can in turn be made up of various successive sub-steps of sorption and washing.

3. Process for preparing multilayers with an ordered mesoporous structure according to claims 1 and 2, **characterized in that** the precursor solution contains:
i) an inorganic precursor of chloride type MCl₄ or alkoxide M(OR)₄, preferably selecting the metal M from amongst Si, Ti, Zr, Si, Nb, V, Ce, or Hf and the R groups from amongst ethoxide, propoxide, iso-propoxide or n-butoxide.
ii) an inorganic acid, preferably Hcl, HNO or Hcl₄.
iii) a surfactant, preferably a non-ionic surfactant, more preferably an alkyl-poly(oxyethylene) diblock copolymer (i.e. alkyl-PEO) or triblock (PEO)ₙ (PPO)₁ₙ (PEO)ₙ, (PPO is polyoxide propylene)
iv) water and
v) a volatilizable liquid medium which is preferably selected from amongst a low-weight molecular alcohol such as methanol, ethanol, propanol, i-propanal, n-butanol, an ether, a cyclic ether such as tetrahydrofuran, or a mixture of the previously mentioned solvents in any proportion.

4. Process for preparing multilayers with an ordered mesoporous structure according to claim 3, **characterized in that** a mixture of the precursor type chloride MCl₄ or alkoxide M(OR)₄ can be used with an organometallic precursor Si(OR)₄₋ₓR'ₓ, or Si(OR)₃R'Si(OR)₃ where the R groups are preferably selected from amongst ethoxide, propoxide, iso-propoxide or n-butoxide, and the R' group is an organic residue wherein the first C atom of the chain is bonded to the Si atom, with R' preferably being selected from amongst phenyl, phenyl substitute, alkyl, alkylamine, alkylthio, alkynyl, or polymerizable residues such as alkylnitrile, allyl, vinyl, acrylates, methacrylates or their derivatives.

5. Process for preparing multilayers with an ordered mesoporous structure according to claims 3 and 4, **characterized in that** the proportions between the reagents are between the following ranges: i) inorganic precursor in proportion of between 1.0x10⁻³ mole/dm⁻³ and 1.0 mole/dm⁻³ of solution. ii) inorganic acid in proportion of between 1.0x10⁻³ mole/dm⁻³ and 5.0 mole/dm⁻³. iii) surfactant in proportion of between 1.0 g/dm⁻³ and 50.0 g/dm⁻³. iv) water in proportion of between 1.0x10⁻⁴ mole/dm⁻³ and 10 mole/dm⁻³. v) volatilizable liquid medium in proportion of between 5 g and 100 g for each 0.01 mole of inorganic precursor.

6. Process for preparing multilayers with an ordered mesoporous structure according to claims 1 through 5, **characterized in that** the precursor solution is aged under mechanical agitation at temperatures of between 20° and 60°, for a time period of between 20 minutes and 8 days.

7. Process for preparing multilayers with an ordered mesoporous structure according to claims 1 through 6, **characterized in that** the substrate whereon the aged precursor solution is deposited in the form of thin nanostructured film is any chemically inert material which can be soaked in a hydroalcoholic solution, preferably being selected from amongst sheets of glass, quartz, silicon wafer or doped silicon, conductive glasses (ITO or FTO), potassium bromide, calcium fluoride, or hydrophilic polymers, including polymer conductors.

8. Process for preparing multilayers with an ordered mesoporous structure according to claim 7, **characterized in that** prior to depositing the first film, the substrate is sequentially washed in water, ethanol and acetone.

9. Process for preparing multilayers with an ordered mesoporous structure according to claims 1 through 8, **characterized in that** the depositing of the films can be carried out by means of dip-coating at temperatures between 22°C and 32°C, under an atmosphere of controlled humidity, preferably between 20% and 50% relative humidity, at stirring speeds of the substrate of between 0.1 and 5 mm/s, preferably of between 0.5 and 2 mm/s, and drying times of between 10 seconds and 30 minutes, depending on the relative humidity.

10. Process for preparing multilayers with an ordered mesoporous structure according to claims 1 through 8, **characterized in that** the depositing of the films is carried out by means of spin-coating at temperatures of between 22°C and 32°C, under an atmosphere of controlled humidity, preferably between 20% and 50% relative humidity, at turning speeds of between 1 revolution per second and 200 revolutions per second, for a time period of between 10 seconds and 20 minutes.

11. Process for preparing multilayers with an ordered mesoporous structure according to claims 1 through 10**, characterized in that** the stabilization of the thin mesostructured film is made up of the following steps:
a) maintenance of the films at a constant relative humidity (RH) of between 40% and 70%, preferably at 50% for 2 to 36 hours,
b) heating in an oven at 50-90°C for a period of 2 to 48 hours,
c) heating in an oven at 100-150°C for a period of 2 to 48 hours, and
d) heating in an oven at 150-200°C for a period of 2 to 48 hours, preferably from 2 to 6 hours.

12. Process for preparing multilayers with an ordered mesoporous structure according to claims 1 through 11, **characterized in that** the steps of deposit and stabilization are alternately repeated until achieving the deposit of a number of layers of between 2 and 20.

13. Process for preparing multilayers with an ordered mesoporous structure according to claims 1 through 11, **characterized in that** the elimination of the surfactant molecules incorporated in the stabilized multilayer film is carried out by means of heating of the substrate-film system at 350-500°C for a period of 2 to 24 hours, increasing the temperature at a rate of 0.1 to 10°/minute until the maximum temperature selected

14. Process for preparing multilayers with an ordered mesoporous structure according to claims 1 through 12, **characterized in that** the elimination of the surfactant molecules incorporated in the stabilized multilayer film is carried out by means of extraction in solutions of an inorganic acid, preferably HCl, HNO₃ or HClO₄ with a concentration of between 10⁻⁴ and 1.0 moles of acid per litre of solution, in a hydroalcoholic solution of water/alcohol of low molecular weight selected from amongst methanol, ethanol, propanol, i-propanol or butanol, mixed in any proportion.

15. Process for preparing multilayers with an ordered mesoporous structure according to claims 1 through 14, **characterized in that** the addition of organic molecules which selectively modify the porous surface of one or more mesoporous layers is carried out by means of the following steps:
a) immersion, for a time period of between 10 minutes and 240 hours and at ambient temperature, of the multilayer with mesoporous structure in a solution that contains at least one bifunctional molecule R'-G, constituted by an anchor group G and a functional group R', and a solvent at a concentration of between 10⁻⁵ and 0.1 mole per litre, and
b) washing with the same solvent used to prepare the solution.

16. Process for preparing multilayers with an ordered mesoporous structure according to claim 15, **characterized in that** the anchor group G of the bifunctional molecule is preferably selected from amongst trialkoxysilane, trichlorosilane, phosphate, phosphonate, polyphenyl, carboxylate, acetylacetonate, aldehyde, amine and thiol and the solvent is preferably selected from amongst water, alcohols or ethers of low molecular weight.

17. Multilayer material with ordered mesoporous structure **characterized in that** the layers, which are in number of between 2 and 20 and constitute the material, are transparent in the visible and close infra-red ranges, and are free of cracks and feature:
a) a thickness of between 30 and 300 nm,
b) an adjustable surface area of between 150 and 800 m²/g,
c) a porosity of between 10 and 60%, and
d) a pore diameter of between 2 and 15 nm.

18. Multilayer material with ordered mesoporous structure according to claim 17, **characterized in that** the composition of each layer corresponds to an inorganic oxide, or to an organic-inorganic hybrid material type M₁₋ₓ(R-Si)ₓO_{2-x/2}, where 0 ≤ x ≤ 0.5.

19. Multilayer material with ordered mesoporous structure according to claim 17, **characterized in that** said material features an optical reflection peak, or the corresponding fall in optical transmission, of some range of photonic frequencies of the visible or close infra-red spectrum, whose position depends on the thickness and index of refraction of each one of the layers which constitute the material and whose origin is in the phenomenon of interference of the light beams reflected in each one of the interfaces present in the multilayer structure.

20. Multilayer material with ordered mesoporous structure according to claims 17 to 19, obtained by means of the Process according to claims 1 to 14.

21. Multilayer material with ordered mesoporous structure according to claim 17, **characterized in that** the composition of each layer corresponds to a superficially modified oxide of type M(R-G)ₓO₂, wherein R is a functional group, 0 ≤ x ≤ 0 and G is an anchor group.

22. Multilayer material with ordered mesoporous structure according to claim 21, obtained by means of a Process according to claims 15 and 16.

23. Use of multilayer materials with ordered mesoporous structure according to claims 17 to 22, in devices of optical sensor type, as part of a solar cell, as part of a photocatalytic sheet, as an optical element in telecommunications and as waveguides.

24. Use of multilayer materials with ordered mesoporous structure, according to claim 23, **characterized in that** the optical sensor, is a device whose optical response varies upon detecting some compound in liquid or gas phase.
